# EUROPÄISCHE PATENTSCHRIFT

(11) **EP 4 348 368 B1**
(45) Veröffentlichungstag und Bekanntmachung des Hinweises auf die Patenterteilung: **22.04.2026**
(21) Anmeldenummer: 22730077.9
(22) Anmeldetag: 16.05.2022
(51) Int. Cl.: G05B 23/02

(54) **VERFAHREN ZUR DIAGNOSE EINES STEUER- UND/ODER REGELUNGSSYSTEMS EINER PROZESSTECHNISCHEN ANLAGE MIT WENIGSTENS EINEM STELLGERÄT ZUM EINSTELLEN EINES PROZESSFLUIDS UND STEUER- UND/ODER REGELUNGSSYSTEM**
METHOD FOR DIAGNOSING A CONTROL AND/OR REGULATING SYSTEM OF A PROCESS FACILITY COMPRISING AT LEAST ONE ACTUATOR FOR SETTING A PROCESS FLUID, AND CONTROL AND/OR REGULATING SYSTEM
PROCÉDÉ DE DIAGNOSTIC D'UN SYSTÈME DE COMMANDE ET/OU DE RÉGULATION D'UNE INSTALLATION DE TRAITEMENT COMPRENANT AU MOINS UN ACTIONNEUR POUR LA MISE EN PLACE D'UN FLUIDE DE TRAITEMENT, ET SYSTÈME DE COMMANDE ET/OU DE RÉGULATION

(30) Priorität: 02.06.2021 DE 102021114324
(43) Veröffentlichungstag der Anmeldung: 10.04.2024
(73) Patentinhaber: Samson Aktiengesellschaft, 60314 Frankfurt am Main (DE)
(72) Erfinder: FIEBIGER, Andreas, 65232 Taunusstein (DE); FIEBIGER, Christian, 65719 Hofheim (DE); BOLL, Tobias, 60385 Frankfurt am Main (DE)
(74) Vertreter: Schmid, Nils T.F.
(86) Internationale Anmeldenummer: PCT/EP2022/063119
(87) Internationale Veröffentlichungsnummer: WO 2022/253556

(56) Entgegenhaltungen:
- US-A1- 2004 122 623
- US-A1- 2005 015 217
- US-A1- 2014 310 222

## Beschreibung

Die Erfindung betrifft ein Verfahren zur Diagnose eines Steuer- und/oder Regelungssystems einer prozesstechnischen Anlage mit wenigstens einem Stellgerät zum Einstellen des Prozessfluids. Die Erfindung betrifft auch ein System zur Datenverarbeitung, insbesondere ein Steuer- und/oder Regelungssystem für eine prozesstechnische Anlage mit wenigstens einem Stellgerät zum Einstellen einer Prozessfluidströmung.

In der Regel ist ein kontinuierlicher Dauerbetrieb prozesstechnischer Anlagen vorgesehen. Bei vielen Prozessen ist zudem eine präzise Prozessführung erforderlich. Falls ein oder mehrere Stellgerät einer prozesstechnischen Anlage ausfallen oder ein Fehlverhalten an den Tag legen, kann dies mit erheblichen wirtschaftlichen Einbußen einhergehen. Bei manchen Prozessen stellt das Risiko eines Fehlers oder eines Defekts eines Stellegeräts darüber hinaus sogar eine Gefahr für Anlagenkomponenten, die Umwelt und Personen dar. Viele Stellgeräte und prozesstechnische Anlage sind daher mit Fehlererkennungs- sowie gegebenenfalls Diagnose-Kapazitäten ausgestattet, um Fehlerzustände anhand vorliegender Fehlersymptome schnellstmöglich zu erkennen. Manche Stellgeräte und prozesstechnische Anlagen sind darüber hinaus mit Analysekapazitäten ausgestattet, um während eines per se störungsfreien Betriebes prädikativ Zustände zu erkennen, die auf das vermutliche baldige Auftreten eines Fehlers hinweisen. Dabei können Warnsymptome, die auf einen zunehmenden Verschleiß, Ermüdung und/oder Alterung hinweisen, als Indikator für das zu erwartende baldige Auftreten eines Verschleiß-, Ermüdungs- und/oder Alterungs-bedingten Fehlers erfasst und analysiert werden. Beispielsweise kann ein Stellgerät dazu ausgestaltet sein, Erfahrungswerte und reale Alterungsbedingungen bezüglich des Stellgeräts miteinander zu vergleichen, um Rückschlüsse auf die erfahrungsgemäß zu erwartende Restlebensdauer des Stellgerätes zu ziehen. In vielen Fällen kommen für das Auftreten von Warn- und Fehlersymptomen mehrere verschiedene potentielle Fehlerursachen infrage, sodass der Betreiber der prozesstechnischen Anlage oftmals keine eindeutige Zuordnung eines Warn- oder Fehlersymptoms zu einer bestimmten Fehlerursache treffen kann und folglich die Fehlerursache nicht ohne weiteres behandeln kann. US 2005/015217 A1 offenbart ein System zur Ursachenanalyse, das ein Datenmodell speichert, welches mögliche Ereignisse, Hypothesen (Fehlerursachen) und Symptome verknüpft und das Modell mit zusätzlichen Informationen anpasst.

DE 102 52 892 A1 beschreibt ein Verfahren zur Diagnose von Feldgeräten der Prozessautomatisierungstechnik, bei dem ein autonomer Software-Agent selbstständig und proaktiv unter Verfolgung mehrere Ziele unterschiedliche Daten in einem Feldgerät überwachen und automatischen Fehlfunktionen suchen soll.

EP 3 579 074 A1 offenbart ein Fehlerbaum-gestütztes Analyse-Verfahren unter Zugrundelegung einer boolschen Logik. Das Verfahren ist insbesondere für sicherheitskritische Mehrkomponentensysteme vorgesehen. Mit dem Verfahren sollen Zustände, in denen Systemversagen auftreten kann, sowie deren Ursachen und Auswirkungen kalkuliert werden. Für das Verfahren wird das Mehrkomponentensystem unter Berücksichtigung von funktionellen Abhängigkeiten einzelner Komponenten zueinander modelliert. Mithilfe des beschriebenen Verfahrens sollen logische Zirkelschlüsse ausgeräumt werden. Das Verfahren ist zu einer eindeutigen Fehlerursachenbestimmung nicht in der Lage.

Aus DE 10 2019 108 268 A1 ist ein System zur Fehlererkennung und -lokalisierung in einem pneumatischen System bekannt. Das System verfügt über einen Detektionsalgorithmus zum Berechnen eines Anomalie-Scores auf der Basis einer Menge eingelesener Signale. Falls eine berechnete Anomalie-Score eine Anomalie indiziert, ist das System dazu ausgebildet, ein maschinelles Lokalisierungsverfahren zur Lokalisierung des Fehlers auszuführen. Das maschinelle Lokalisierungsverfahren kann zuvor in einer Trainingsphase trainiert worden sein, um auf Basis eines Schaltplans zu der Automatisierungsanlage zu dem berechneten Anomalie-Score Wahrscheinlichkeiten für mögliche Fehlerursachen in Bezug auf einzelne Komponenten der Automatisierungsanlage zu berechnen und als Ergebnis bereitzustellen. Zu einer eindeutigen Fehlerursachenbestimmung ist auch dieses beschriebene System nicht in der Lage. Ein besonderer Nachteil derartiger Verfahren liegt darin, dass die unpräzise Benennung einer oder mehrerer vermeintlicher Fehlerquellen oftmals zu einem unwirtschaftlichen Wartungsaufwand führt, wenn tatsächlich fehlerfreie Komponenten unnötigen Wartungsarbeiten unterzogen oder gegebenenfalls ausgetauscht werden und zu diesem Zweck unter Umständen sogar eine Unterbrechung des Prozesses erfolgt.

EP 2 987 040 B1 betrifft ein Verfahren zur Diagnose von Fehlerkombinationen in einem System. Die Diagnose betrifft eine Kombination von Systemfehlern. Sie umfasst das Empfangen von Symptomdaten bezüglich erfasster oder überwachter Symptome in dem System. Mithilfe einer sogenannten "L-best interference (Ranked Algorithm (RA))" Technik wird ausgehend von den Symptomen berechnet, welche Fehlerkombination als wahrscheinlichste Ursache der Symptome infrage kommt. Eine eindeutige Aussage kann mit dem Verfahren nicht getroffen werden. Es hat sich gezeigt, dass das Adressieren einer Fehlerkombination, die nach dem beschriebenen Verfahren als wahrscheinlichste benannt worden ist, in vielen Fällen nicht die tatsächlich relevante Fehlerursache identifizieren konnte, sodass unnötige und damit unwirtschaftliche Wartungsarbeiten verursacht werden.

EP 3 335 089 A1 befasst sich mit einem Verfahren zur Bestimmung von Diagnosemustern für Zeitreihen eines technischen Systems. Ausgehend von einem Diagnosemuster werden mögliche Erweiterungen dieses Musters bestimmt. Sodann wird eine Menge an Sequenzen aus erfassten Zeitreihen bestimmt, in welchem ein erweitertes Muster wiedererkannt wird. Für jede dieser Sequenzen wird geprüft, ob sie mit dem Auftreten von Fehlerereignissen in Verbindung gebracht werden kann. Das erweiterte Muster, welches den meisten Fehlereignissen zugeordnet wird, wird anschließend als neues Diagnosemuster betrachtet. Auf diese Weise soll ein Diagnosesystem in die Lage versetzt werden, zu lernen, welche Zeitreihen-Muster auf das Auftreten bestimmter Eigenschaften hindeuten. Insbesondere für Fehler- und Warnsymptome, die nicht eindeutig einem Diagnosemuster zugeordnet sind, kann mit dem Verfahren jedoch keine Diagnose durchgeführt werden.

Es kann daher als eine Aufgabe der Erfindung gesehen werden, die Probleme des Stands der Technik zu überwinden, insbesondere ein Diagnoseverfahren und/oder Datenverarbeitungssystem, insbesondere ein Steuer- und/oder Regelungssystem, für eine prozesstechnische Anlage bereitzustellen, das eine eindeutige Diagnostikaussage bezüglich einer Fehlerursache selbst dann gewährleisten kann, wenn ausgehend von einem bereitstehenden Warn- und/oder Fehlersymptom kein unmittelbarer Rückschluss auf die Ursache des Fehlers getroffen werden kann.

Diese Aufgabe löst der Gegenstand der unabhängigen Ansprüche.

Demnach ist ein Verfahren zur Diagnose eines Steuer- und/oder Regelungssystems einer prozesstechnischen Anlage mit wenigstens einem Stellgerät zum Einstellen eines Prozessfluids vorgesehen. Eine prozesstechnische Anlage kann beispielsweise eine chemische Anlage, wie eine petrochemische Anlage, ein Kraftwerk, wie eine Nuklearkraftwerk, eine lebensmittelverarbeitende Anlage, wie eine Brauerei, oder dergleichen sein. Ein Stellgerät kann im Allgemeinen eine vorzugsweise gesteuerte oder geregelte Vorrichtung zur Beeinflussung eines Prozessfluids in der prozesstechnischen Anlage sein, beispielsweise eine Pumpe, ein Auf-/Zu-Ventil, ein Stellventil oder dergleichen. Das Steuer- und/oder Regelungssystem umfasst wenigstens ein Stellgerät. Alternativ kann das Steuer- und/oder Regelungssystem eine Vielzahl von Stellgeräten gleicher und/oder unterschiedlicher Art umfassen. Insbesondere kann das Steuer- und/oder Regelungssystem zumindest eine Gruppe von Stellgeräten einer prozesstechnischen Anlage umfassen, beispielsweise eine Gruppe gleichartiger Stellgeräte, eine Gruppe von Stellgeräten, die einem bestimmten funktionellen und/oder örtlichen Teilbereich der prozesstechnischen Anlage zugeordnet ist, oder sämtliche, insbesondere mit dem Prozessfluid interagierende, Stellgeräte der prozesstechnischen Anlage. Vorzugsweise umfasst oder besteht die Gruppe von Stellgeräten aus Stellgeräten, die mit einem Hilfsenergiefluid, beispielsweise einem Hydraulikfluid oder einem Pneumatikfluid, und/oder elektrisch betrieben werden. Ein pneumatisch betriebenes Stellgerät umfasst einen pneumatisch betätigten Stellaktor, wie einen Pneumatikzylinder mit Federrückstellung, oder zwei gegensätzlich druckbeaufschlagbare Pneumatikzylinder.

Das erfindungsgemäße Verfahren umfasst als Schritt (a) das Bereitstellen einer Diagnosedatenbank, die eine Zuordnung mehrerer Zustandsursachen zu je einem Satz umfassend mehrere vorbestimmte System-Referenz-Eigenschaften umfasst. Dabei wird jeder System-Referenz-Eigenschaft wenigstens eine notwendige Bedingung zugeordnet.

Eine notwendige Bedingung kann sich beispielsweise auf einen Mindestschwellwert, einen Maximalschwellwert, eine Bandbreite in Bezug auf ein System-Ist-Eigenschaft, wie wenigstens einen Messwert, oder dergleichen beziehen. Eine notwendige Bedingung kann sich zusätzlich oder alternativ auf das Vorliegen oder Nichtvorliegen eines vorbestimmten Signals, beispielsweise eines Endanschlag-Taster-Signals, eines Not-aus-Schalter-Signals, eines Totmannschalter-Signals oder ähnliches, beziehen. Eine System-Referenz-Eigenschaft kann einer notwendigen Bedingung zugeordnet sein, wobei beim Vorliegen von System-Ist-Eigenschaften, die eine (einzige) notwendige Bedingung realisieren, die zugehörige System-Referenz-Eigenschaft erfüllt wird. Wenn eine notwendige Bedingung nicht durch die System-Ist-Eigenschaft realisiert wird, ist bzw. sind die Bedingung(en) dieser System-Referenz-Eigenschaft nicht erfüllt. Sofern zu einer System-Ist-Eigenschaft kein aktuell gültiger Messwert oder kein aktuell gültiges Signal bereitstehen, ist die zu dieser System-Ist-Eigenschaft korrelierende notwendige Bedingung unbestimmt.

Ein Satz System-Referenz-Eigenschaften besteht aus wenigstens einer System-Referenz-Eigenschaft oder umfasst zwei oder mehr System-Referenz-Eigenschaften. Eine System-Referenz-Eigenschaft kann beispielsweise ein Messwert oder ein Zustandswert, wie ein Diagnoseergebnis, beispielsweise eine Warnmeldung oder eine Fehlermeldung, sein. Bei dem erfindungsgemäßen Verfahren wird eine Diagnosedatenbank bereitgestellt, die eine Zuordnung mehrerer Zustandsursachen zu je einem Satz umfassend mehrere vorbestimmte System-Referenz-Eigenschaften umfasst, wobei die Diagnosedatenbank ferner mit einer Zuordnung einer oder mehrerer Zustandsursachen zu einem jeweiligen Satz bestehend aus nur einer System-Referenz-Eigenschaft umfassen kann. Eine System-Referenz-Eigenschaft kann auch eine bestimmte Gruppe von verschiedenartigen, insbesondere zueinander korrelierenden, Messwerten und/oder eine Sequenz von mehreren, insbesondere gleichartigen oder verschiedenartigen, Messwerten gemäß einer vorbestimmten zeitlichen Abfolge sein. Insbesondere kann die Diagnosedatenbank dahingehend bereitgestellt werden, dass mehrere verschiedene Zustandsursachen, insbesondere Fehlerursachen, entsprechend einer kausalen Korrelation einem jeweiligen Satz vorbestimmter System-Referenz-Eigenschaften zugeordnet werden, die als Warn- und/oder Fehlersymptome bezeichnet sein können. Es kann bevorzugt sein, dass eine Diagnosedatenbank bereitgestellt wird, in der eine eindeutige kausale Korrelation von erfassbarer Wirkung in Form eines Satzes vorbestimmte System-Referenz-Eigenschaften zu der dazugehörigen Fehlerursache in Form einer Zustandsursache hinterlegt ist, insbesondere für wenigstens zehn, wenigstens 50, wenigstens 100 oder mehr Zustandsursachen. Die Diagnosedatenbank ist dahingehend gestaltet, dass eine eindeutige Zuordnung einer vorbestimmten Zustandsursache zu einem bestimmten Satz vorbestimmter System-Referenz-Eigenschaften bereitgestellt wird, sodass in Kenntnis der System-Referenz-Eigenschaften eindeutig auf das Vorliegen der dazugehörigen Zustandsursache geschlussfolgert werden kann. Die Bereitstellung der Diagnosedatenbank wird vorzugsweise mithilfe eines computerlesbaren Speichermediums durchgeführt. Implizit oder explizit kann die Diagnosedatenbank abbilden, zwischen welcher oder welchen System-Referenz-Eigenschaft(en) und welchen Zustandsursachen keine insbesondere kausale Korrelation besteht.

Als Schritt (b) umfasst das erfindungsgemäße Verfahren das Bereitstellen einer Testdatenbank, die eine Zuordnung wenigstens verschiedener Diagnosetests zu je wenigstens einer vorbestimmten System-Referenz-Eigenschaft umfasst. Die Bereitstellung der Testdatenbank wird vorzugsweise mithilfe eines computerlesbaren Speichermediums durchgeführt. Eine Datenbank, beispielsweise eine Diagnosedatenbank oder eine Testdatenbank im Sinne der vorliegenden Offenbarung bezeichnet im allgemeinen eine Datenstruktur, die eine reproduzierbare, insbesondere bidirektionale, Korrelation wenigstens einer ersten Datenart (beispielsweise Zustandsursache oder Diagnosetest) zu wenigstens einer zweiten Datenart (beispielsweise System-Referenz-Eigenschaft) auf wenigstens einem computerlesbaren Speichermedium abbildet. Es kann bevorzugt sein, dass die Testdatenbank eine Zuordnung eines oder mehrerer Diagnosetests zu mehreren vorbestimmten System-Referenz-Eigenschaften umfasst. Ein Diagnosetest bezeichnet im Allgemeinen eine Testroutine beziehungsweise ein Testverfahren, mit welchem, gegebenenfalls unter Durchführung einer gezielten Beeinflussung eines einzigen Stellgerätes oder mehrerer Stellgeräte, eine Information zur Bestimmung wenigstens einer System-Referenz-Eigenschaft erlangt wird. Für ein Stellgerät in Form eines pneumatisch betätigten Stellventils ist zum Beispiel der sogenannte Teilhubtest (oder Partial-Stroke-Test) ein Testverfahren, bei dem ein insbesondere linearbewegliches Stellventil in einem begrenzten Stellbereich gezielt bewegt wird, um ausgehend von einem vorbestimmten elektrischen oder pneumatischen Steuersignal als System-Ist-Eigenschaft die Stellantwort des pneumatischen Stellventils zu erfassen (beispielsweise Stellgeschwindigkeit, Stellposition in Abhängigkeit vom Stelldruck) und so eine oder mehrere System-Referenz-Eigenschaften, wie Warnsymptome oder Fehlersymptome, zu erkennen (z.B. Verhalten OK, veränderte Reibung, veränderter Stellweg, verkehrte Stellbewegungsrichtung). Anders ausgedrückt bildet die Testdatenbank ab, welcher Diagnosetest oder welche Diagnosetests zur Bestimmung einer vorbestimmten System-Referenz-Eigenschaft geeignet ist oder sind. Zusätzlich kann die Testdatenbank abbilden welche vorbestimmte(n) System-Referenz-Eigenschaft(en) mithilfe eines oder mehrerer vorbestimmter Diagnosetests ermittelbar sind. Implizit oder explizit kann die Testdatenbank abbilden, welche vorbestimmten System-Referenz-Eigenschaften ein beliebiger Diagnosetests nicht zu erkennen in der Lage ist.

Die Schritte (a) und (b) können in beliebiger Reihenfolge durchgeführt werden, insbesondere vor den Schritten (e), (f) und (g) sowie gegebenenfalls vor Schritt (d) und/oder (c). Es ist denkbar, dass die Schritte (a) und (b) simultan durchgeführt werden. Es ist denkbar, dass zu Beginn des erfindungsgemäßen Verfahrens Schritt (a) und/oder (b) initial durchgeführt wird. Zusätzlich oder alternativ kann Schritt (a) und/oder (b) zumindest teilweise erneut ausgeführt werden, beispielsweise um die Diagnosedatenbank und/oder die Testdatenbank hinsichtlich einer Veränderung der Architektur, insbesondere hinsichtlich einer Veränderung der Stellgerät der Stellgeräte, des Steuer- und/oder Regelungssystems anzupassen. Alternativ oder zusätzlich kann Schritt (a) (b) zumindest teilweise erneut ausgeführt werden, um eine Diagnosedatenbank hinsichtlich zwischenzeitlich hinzugewonnener Erkenntnisse zu Kausalitäten zwischen Zustandsursachen, wie Fehlerursachen, und System-Referenz-Eigenschaften, wie Warn- oder Fehlersymptomen, anzupassen. Eine erneute zumindest teilweise Durchführung von Schritt (b) kann auch erfolgen, um weitere Diagnosetests, insbesondere hinsichtlich deren zugeordneter System-Referenz-Eigenschaften, anzupassen.

Bei dem erfindungsgemäßen Verfahren erfolgt gemäß einem Schritt (c) ein Erfassen wenigstens einer System-Ist-Eigenschaft des Steuer- und/oder Regelungssystems. Die System-Ist-Eigenschaft kann beispielsweise im Rahmen eines Diagnosetests erfasst werden und/oder während des betriebsgemäßen Gebrauchs des wenigstens einen Stellgeräts beziehungsweise des Steuer- und/oder Regelungssystems. Das Erfassen einer System-Ist-Eigenschaft kann beispielsweise durch Durchführung einer Messung und/oder Auslesen eines Sensorwertes oder Berechnen eines von einem oder mehreren Sensorwerten abgeleiteten Wertes umfassen. Alternativ oder zusätzlich kann das Erfassen einer System-Ist-Eigenschaft umfassen, das wenigstens ein binäres Signal, wie ein Not-aus-Schalter-Signal, ein Endanschlag-Taster-Signal oder dergleichen, ausgelesen wird. Das Erfassen einer System-Ist-Eigenschaft kann beispielsweise das Korrelieren von wenigstens einem Soll-Wert, wie einem Steuerdruck-Wert oder einem elektrischen Stellsignal, und wenigstens einem dem Soll-Wert zugeordneten Ist-Wert, wie eine Ventil-Stellung, umfassen, beispielsweise im Rahmen eines Diagnosetests, etwa eines Teilhubtests.

Das erfindungsgemäße Verfahren umfasst ferner einen Schritt (d), gemäß welchem wenigstens eine erste System-Referenz-Eigenschaft bestimmt wird, deren wenigstens eine notwendige Bedingung durch die wenigstens eine in Schritt (c) erfasste System-Ist-Eigenschaft erfüllt wird. Die erste System-Referenz-Eigenschaft kann beispielsweise ein erstes Warnsymptom sein, welches vorzugsweise kausal durch mehrere verschiedene Zustandsursachen verursacht worden sein kann.

Ferner ist erfindungsgemäß vorgesehen, dass in einem weiteren Schritt (e) auf Basis der Diagnosedatenbank für die wenigstens eine Zustandsursache, deren Satz vorbestimmter System-Referenz-Eigenschaften die in Schritt (d) bestimmte erste System-Referenz-Eigenschaft umfasst, für wenigstens eine zweite System-Referenz-Eigenschaft dieses Satzes erkannt wird, insbesondere anhand der wenigstens einen in Schritt(c) erfassten System-Ist-Eigenschaft(en), ob die wenigstens eine der zweiten System-Referenzeigenschaft zugeordnete Bedingung bestimmt ist. Vorzugsweise ist vorgesehen, dass in Reaktion auf das Erfassen der wenigstens einen System-Ist-Eigenschaft, bezüglich welcher in Schritt (d) die wenigstens eine erste System-Referenz-Eigenschaft bestimmt wird, veranlasst wird, dass Schritt (e) durchgeführt wird. Es kann bevorzugt sein, dass Schritt (e) mehrfach nacheinander oder gleichzeitig in Bezug auf mehrere verschiedene Zustandsursachen durchgeführt wird, wobei insbesondere die mehreren Zustandsursachen, für die Schritt (e) mehrfach nacheinander oder gleichzeitig durchgeführt wird, alle die erste gemäß Schritt (d) bestimmte System-Referenz-Eigenschaft umfassen. Wie oben in Hinblick auf Schritt (a) beschrieben, kann eine System-Referenz-Eigenschaft anhand der ihr zugeordneten notwendigen Bedingung als erfüllt oder als nicht erfüllt bestimmt sein. Beispielsweise kann die notwendige Bedingung anhand eines Minimalschwellwerts definiert sein, wobei beim Überschreiten des Minimalschwellenwertes durch eine System-Ist-Eigenschaft die Bedingung erfüllt ist und wobei beim Unterschreiten des Minimalschwellenwertes die Bedingung nicht erfüllt ist. Beispielsweise kann ein Minimalschwellwert eine Mindesttemperatur sein. Wenn keine gültige aktuelle System-Ist-Eigenschaft erfasst wurde, beispielsweise weil ein zugeordnetes Messsignal nicht abgerufen wurde oder zumindest nicht innerhalb eines vorbestimmten Zeitrahmens abgerufen wurde, oder falls ein von Messsignalen abgeleiteter Wert nicht oder zumindest nicht innerhalb eines vorbestimmten Zeitrahmens berechnet wurde, ist die zugeordnete notwendige Bedingung unbestimmt. Beispielsweise kann ein Zeitrahmen durch einen Takt, beispielsweise einen 5-Minuten-Takt, festgelegt sein und innerhalb der vergangenen Taktdauer keine Temperaturmessung erfolgt beziehungsweise abgerufen worden sein. Wenn bezüglich sämtlicher System-Referenz-Werte die jeweils zugeordnete Bedingung bestimmt wird, also entweder erfüllt oder nicht erfüllt wird, kann anhand der Diagnosedatenbank ermittelt werden, dass die zugeordnete Fehlerursache eindeutig vorliegt oder eindeutig nicht vorliegt. Solange jedoch wenigstens eine notwendige Bedingung unbestimmt ist, kann bezüglich einer Zustandsursache mangels eindeutiger Informationen zu ihrer wenigstens einen vorbestimmten zweiten System-Referenz-Eigenschaften weder deren Vorliegen noch deren Nichtvorliegen ausgeschlossen werden.

Gemäß Schritt (f) wird erfindungsgemäß auf Basis der Testdatenbank für die wenigstens eine zweite System-Referenz-Eigenschaft mit einer in Schritt (d) als unbestimmt erkannten notwendigen Bedingung wenigstens ein korrespondierender Diagnosetest auf Basis der Diagnosedatenbank bestimmt. Vorzugsweise ist vorgesehen, dass in Reaktion darauf, dass in Schritt (e) wenigstens eine zweite System-Referenz-Eigenschaft mit einer unbestimmten zugeordneten Bedingung erkannt wird, die Durchführung von Schritt (f) veranlasst wird. Es ist denkbar, dass Schritt (f) einen ersten Teilschritt (f1) umfasst, gemäß dem auf Basis der Testdatenbank zunächst die zweite System-Referenz-Eigenschaft mit der als unbestimmt erkannten notwendigen Bedingung als offene System-Referenz-Eigenschaft markiert wird. Zusätzlich kann Schritt (f) einen zweiten Teilschritt (f2) umfassen, gemäß dem auf Basis der Diagnosedatenbank im Anschluss an den ersten Teilschritt (f1) ein zu der offenen System-Referenz-Eigenschaft korrespondierender Diagnosetest ermittelt wird. Erfindungsgemäß ist vorgesehen, dass ausgehend von der zuvor erfolgten Erkennung, dass die notwendige Bedingung der zweiten System-Referenz-Eigenschaft gegenwärtig unbestimmt ist, ein oder mehrere Diagnosetests identifiziert werden der oder die dazu geeignet sind, eine Bestimmung der notwendigen Bedingung als erfüllt oder nicht erfüllt herbeizuführen, um anhand der dann bestimmbaren beziehungsweise bestimmten zweiten System-Referenz-Eigenschaft eine zumindest konkretere Aussage zum Vorliegen oder Nichtvorliegen der zugeordneten Zustandsursache treffen zu können. Das erfindungsgemäße Verfahren erlaubt das Durchführen einer eindeutigen Zustandsursachenbestimmung ausgehend von einer identifizierten System-Referenz-Eigenschaft, wie einem Warnsymptom oder Fehlersymptom, die an sich üblicherweise keinen eindeutigen Rückschluss auf die zugrunde liegenden Zustandsursache, beispielsweise den zugrunde liegenden Fehlerzustand, erlauben würde . Ein unsicheres und unpräzises erraten möglicher Fehlerursachen auf Basis einer automatisierten Bestimmung einer oder mehrerer wahrscheinlicher Zustandsursachen kann unterbleiben und somit unnötiger Aufwand sowie gegebenenfalls unnötige Ruhezeiten der prozesstechnischen Anlage vermieden werden. Mit dem erfindungsgemäßen Verfahren können tatsächliche Zustandsursachen ermittelt und zielgerichtet die notwendigen Schritte zu deren Behandlung eingeleitet werden.

Bei einer Ausführung des erfindungsgemäßen Verfahrens ist ein weiterer Schritt (g) vorgesehen, in dem der wenigstens eine zuvor in Schritt (f) bestimmte Diagnosetest durchgeführt wird, um eine zu der zweiten System-Referenz-Eigenschaft korrespondierende System-Ist-Eigenschaft zu erfassen und darauf basierend die zugeordnete notwendige Bedingung zu bestimmen, insbesondere zu bestimmen, ob durch die System-Ist-Eigenschaft die notwendige Bedingung der (offenen) zweiten System-Referenz-Eigenschaft erfüllt wird oder nicht erfüllt wird. Für den Fall, dass ausgehend von dem zuvor beschriebenen Verfahrensschritt (e) mehrere zweite System-Referenz-Eigenschaften als unbestimmt erkannt wurden, d.h. mit jeweiliger unbestimmter Bedingung ermittelt wurden, und/oder ausgehend von dem zuvor beschriebenen Verfahrensschritt (f) mehrere Diagnosetests für zwei oder mehr zweite System-Referenz-Eigenschaften ermittelt wurden, kann Schritt (g) zur Durchführung mehrerer Diagnosetests entsprechend mehrfach durchgeführt werden. Dabei kann es bevorzugt sein, dass die Anzahl der mehreren Diagnosetests zur Bestimmung der zweiten System-Referenz-Eigenschaften geringer ist als die Anzahl der zu bestimmenden zweiten System-Referenz-Eigenschaften, beispielsweise indem wenigstens ein Diagnosetest durchgeführt wird, mit dem sogleich für zwei oder mehr zweite System-Referenz-Eigenschaften die jeweiligen Bedingungen bestimmbar sind. Es kann bevorzugt sein, dass die Durchführung des wenigstens einen Diagnosetests gemäß Schritt (g) unverzüglich im Anschluss an die Durchführung von Schritt (f) erfolgt. Insbesondere kann Schritt (g) im Falle mehrerer unbestimmter zweiter System-Referenz-Eigenschaften mit unbestimmten notwendigen Bedingungen zur Durchführung verschiedener Diagnosetests wiederholt werden, insbesondere zumindest so oft wiederholt werden, bis eine eindeutige Identifizierung einer Zustandsursache zu vorliegenden bestimmten System-Referenz-Eigenschaften umgesetzt wurde.

Gemäß einer Weiterbildung der Erfindung wird der wenigstens eine Diagnosetest in Schritt (g) erst im Anschluss an eine insbesondere manuelle Bedienerfreigabe ausgeführt. Es kann vorgesehen sein, dass im Anschluss an eine einzige Bedienerfreigabe genau ein Diagnosetest durchgeführt wird oder mehrere Diagnosetests, vorzugsweise sukzessive, durchgeführt werden. Alternativ kann vorgesehen sein, dass jeder durchzuführende Diagnosetest zuvor einer individuellen Bedienerfreigabe bedarf. Alternativ oder zusätzlich ist denkbar, dass auf Basis der Diagnosedatenbank erkannt wird, ob eine Diagnosetest einer Bedienerfreigabe bedarf oder nicht, beispielsweise falls einerseits eine erste Art Diagnosetests während eines laufenden Anlagenbetriebs ohne Störung des Anlagenprozesses durchführbar sind, wohingegen andererseits eine andere Art Diagnosetests, zumindest beim Vorliegen bestimmter Betriebsbedingungen, nicht ohne erwartbare Störung des Anlagenprozesses durchführbar sind. Zusätzlich ist denkbar, dass, falls mehrere Diagnosetests in Schritt (f) ermittelt wurden, eine Bedienerfreigabe vorzugeben ist, die eine Priorisierung oder Reihenfolge hinsichtlich der durchzuführenden Diagnosetests bestimmt. Beispielsweise ist denkbar, dass ein Bediener zwischen mehreren zur Wahl stehenden Diagnosetests einen durchzuführenden Diagnosetest freigibt.

Bei einer Ausführung der Erfindung wird in Schritt (f) ein Diagnosetest bezüglich einer Zustandsursache bestimmt, von deren Satz System-Referenz-Eigenschaften wenigstens eine vorliegt, insbesondere mehrere vorliegen, wobei insbesondere nur eine einzige zweite System-Referenz-Eigenschaft des Satzes unbestimmt ist. Sofern ausgehend von der ersten System-Referenz-Eigenschaft mehrere Zustandsursachen zu bestimmen sind, kann in Schritt (f) ein Diagnosetest ermittelt für eine zweite System-Referenz-Eigenschaft eines Satzes einer der mehreren Zustandsursachen, dem weniger System-Referenz-Eigenschaften, insbesondere weniger (offene) zweite System-Referenz-Eigenschaften zugeordnet sind, als dem jeweiligen Satz der anderen zu bestimmenden Zustandsursache(n). So kann die Ermittlung der durchzuführenden mehreren Diagnosetests ausgehend von der Diagnosedatenbank zu den der ersten System-Referenz-Eigenschaft zugeordneten Zustandsursachen dahingehend erfolgen, dass wenigstens ein Diagnosetest als vorrangig ermittelt wird, mit dem möglichst unmittelbar und/oder schnell eine eindeutige Identifikation zum Vorliegen oder Nichtvorliegen einer der Zustandsursachen getroffen werden kann.

Gemäß einer weiteren Ausführung eines erfindungsgemäßen Diagnoseverfahrens, die mit den vorigen kombinierbar ist, wird in Schritt (f) ein Diagnosetest bestimmt, der wenigstens einer zweiten System-Referenz-Eigenschaft korrespondiert, die wenigstens zwei verschiedenen Zustandsursachen zugeordnet ist. Insbesondere kann auf Basis der Diagnosedatenbank hinsichtlich mehrerer zweiter System-Referenz-Eigenschaften mit einer jeweiligen unbestimmten notwendigen Bedingung eine Ermittlung der durchzuführenden Diagnosetests dahingehend erfolgen, dass die Anzahl der Diagnosetests minimiert wird, dass also mit einer möglichst geringen Anzahl von Diagnosetests möglichst viele auf verschiedene System-Referenz-Eigenschaften bezogene notwendige Bedingungen bestimmt werden.

Gemäß einer Weiterbildung eines Diagnoseverfahrens, bei dem wenigstens ein Diagnosetest in Schritt (g) durchgeführt wird, wird in einem weiteren Schritt (h) im Anschluss an Schritt (g) und ausgehend von der in diesem Schritt (g) bestimmten System-Referenz-Eigenschaft sowie der Diagnosedatenbank eine korrespondierende Zustandsursache, insbesondere als eindeutig vorliegend, erkannt. In Schritt (h) kann wenigstens eine erste System-Referenz-Eigenschaft und wenigstens eine in Schritt (g) bestimmte zweite System-Referenz-Eigenschaft eines Satzes von System-Referenz-Eigenschaften berücksichtigt werden.

Gemäß einer Weiterbildung des Diagnoseverfahrens kann auf Basis der in Schritt (h) erkannten Zustandsursache eine auf diese Zustandsursache bezogene Zustandsmitteilung, wie eine Handlungsempfehlung, Warnmitteilung oder Fehlermitteilung, bereitgestellt werden. So kann auf Basis des erfindungsgemäßen Diagnoseverfahrens rasch und zielgerichtet eine Behandlung einer eindeutig erkannten Zustandsursache erfolgen.

Bei einer Ausführung des erfindungsgemäßen Diagnoseverfahrens kann in Schritt (c) wenigstens eine System-Ist-Eigenschaft im laufenden Steuer- oder Regelungsbetrieb des Steuer- und/oder Regelungssystems erfasst werden. Alternativ oder zusätzlich kann in Schritt (c) wenigstens eine System-Ist-Eigenschaft in einem Testbetrieb des Steuer- und/oder Regelungssystems (während eines Diagnosetest) erfasst werden, insbesondere indem planmäßig und/oder regelmäßig ein Diagnosetest durchgeführt wird. Beispielsweise kann ein Diagnosetest regelmäßig in vorbestimmten Zeitabständen oder zu vorbestimmten Zeitpunkten durchgeführt werden. Alternativ kann ein Diagnosetest planmäßig unter bestimmten Randbedingungen durchgeführt werden, die anhand einer oder mehrerer System-Ist-Eigenschaften identifizierbar sein können.

Gemäß einer anderen Ausführung eines erfindungsgemäßen Diagnoseverfahrens kann in Schritt (d) wenigstens eine System-Referenz-Eigenschaft auf Basis einer als Historienregelwerk definierten notwendigen Bedingung bestimmt werden, wobei anhand des Historienregelwerks eine Zuordnung einer vorbestimmten zeitlichen Abfolge und/oder Dauer von System-Ist-Eigenschaften, wie Messwerten, binären Zustandssignalen oder dergleichen zu der ersten System-Referenz-Eigenschaft durchgeführt wird.

Die Erfindung betrifft ferner ein System zur Datenverarbeitung, umfassend Mittel zur Ausführung des oben beschriebenen Verfahrens, insbesondere nach einer der oben beschriebenen erfindungsgemäßen Ausführungen oder Weiterbildungen.

Die Erfindung betrifft auch ein System mit einem Steuer- und/oder Regelungssystem für eine prozesstechnische Anlage mit wenigstens einem Stellgerät zum Einstellen einer Prozessfluidströmung Insbesondere ist das Steuer- und/oder Regelungssystem zur Durchführung des Verfahrens nach einem der zuvor beschriebenen erfindungsgemäßen Ausführungen oder Weiterbildungen konfiguriert. Zur Durchführung des Diagnoseverfahrens kann das System, beispielsweise das Steuer- und/oder Regelungssystem, wenigstens ein computerlesbarer Speicher für die Diagnosedatenbank und die Testdatenbank umfassen, und wenigstens einen Computer umfassen, der dazu ausgestaltet ist, die Verfahrensschritte (c), (d), (e) und/oder (f) sowie gegebenenfalls (g) und/oder (h) zumindest teilweise durchzuführen. Das System, insbesondere Steuer- und/oder Regelungssystem, kann mehrere computerlesbare Speicher und Computer umfassen, die datenübertragungsgemäß miteinander verbunden sind. Zusätzlich oder alternativ kann das System, insbesondere Steuer- und/oder Regelungssystem, wenigstens einen Sensor, insbesondere mehrere Sensoren umfassen. Beispielsweise kann das Steuer- und/oder Regelungssystem wenigstens eine Steuerungs- und/oder Regelungselektronik eines Stellgerätes umfassen oder daraus bestehen. Das Steuer- und/oder Regelungssystem kann mehrere Steuerung- und/oder Regelungselektronikeinheiten mehrerer Stellgeräte umfassen. Zusätzlich oder alternativ kann das Steuer- und/oder Regelungssystem einer Leitwarte einer prozesstechnischen Anlage umfassen. Das System, insbesondere Steuer- und/oder Regelungssystem, kann Datenübertragung gemäß mit wenigstens einem Cloud-Speicher und/oder Cloud-Computer verbunden sein. Es ist denkbar, dass System-Ist-Eigenschaften des Steuer- und/oder Regelungssystems lokal an dem oder den Stellgeräten der prozesstechnischen Anlage erfasst werden. Die Bereitstellung der Diagnosedatenbank und/oder der Testdatenbank kann wahlweise lokal im Bereich der prozesstechnischen Anlage oder räumlich getrennt zu der prozesstechnischen Anlage umgesetzt sein. Der wenigstens eine Prozessor oder Computer zur Durchführung wenigstens eines der Schritte (d), (e) und/oder (f) sowie gegebenenfalls (g) und/oder (h) kann lokal im Bereich der prozesstechnischen Anlage, beispielsweise in oder nahe einem Stellgerät oder einer Leitwarte angeordnet sein, oder räumlich getrennt zu der prozesstechnischen Anlage umgesetzt sein.

Weitere Merkmale, Eigenschaften und Vorteile der Erfindung werden durch die folgende Beschreibung einer bevorzugten Ausführung der Erfindung deutlich gemacht, in denen zeigen:
- Figur 1: eine schematische Darstellung einer ersten Ausführung eines Verfahrens zur Diagnose eines Steuer- und/oder Regelungssystems;
- Figur 2: eine schematische Darstellung einer zweiten Ausführung eines Verfahrens zur Diagnose eines Steuer- und/oder Regelungssystems;
- Figur 3: eine schematische Darstellung einer dritten Ausführung eines Verfahrens zur Diagnose eines Steuer- und/oder Regelungssystems;
- Figur 4: eine schematische Darstellung einer Diagnosedatenbank;
- Figur 5: eine schematische Darstellung der Erkennung des Vorliegens oder nicht Vorliegens einer bestimmten Zustandsursache;
- Figur 6: eine schematische Darstellung der Ermittlung von Diagnosetests korrespondierend zu verschiedenen System-Referenz-Eigenschaften; und
- Figur 7: eine schematische Darstellung einer prozesstechnischen Anlage.

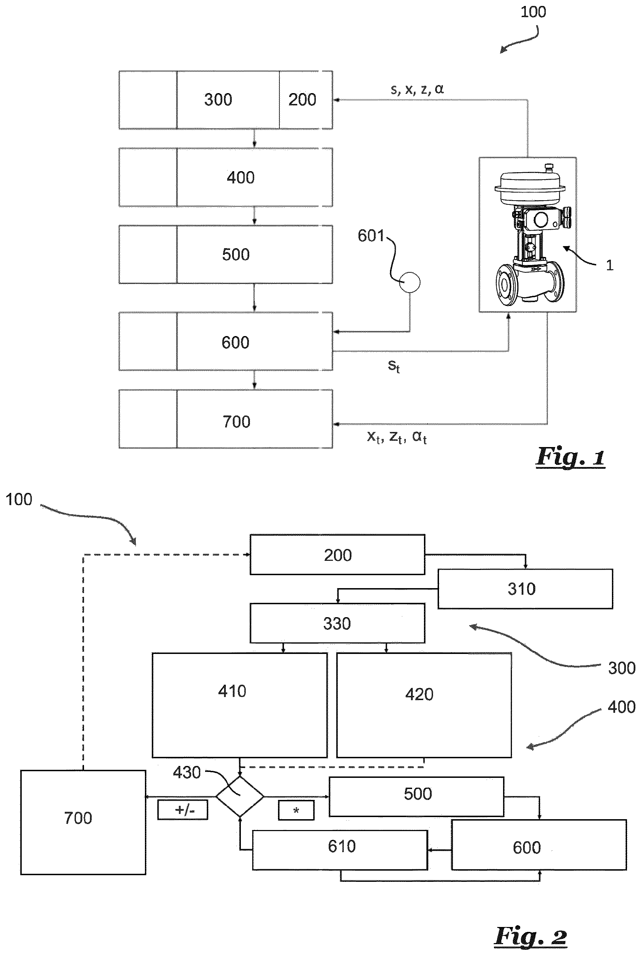

Figur 1 zeigt eine vereinfachte Darstellung eines erfindungsgemäßen Verfahrens zur Diagnose eines Steuer- und/oder Regelungssystems einer prozesstechnischen Anlage mit wenigstens einem Stellgerät. Ein Stellgerät 1 wird hier exemplarisch als ein pneumatisch betätigtes Stellventil mit elektropneumatischem Stellaktor dargestellt. Das abgebildete Stellgerät steht exemplarisch für eine beliebige Art und Anzahl von Stellgeräten einer prozesstechnischen Anlage 10.

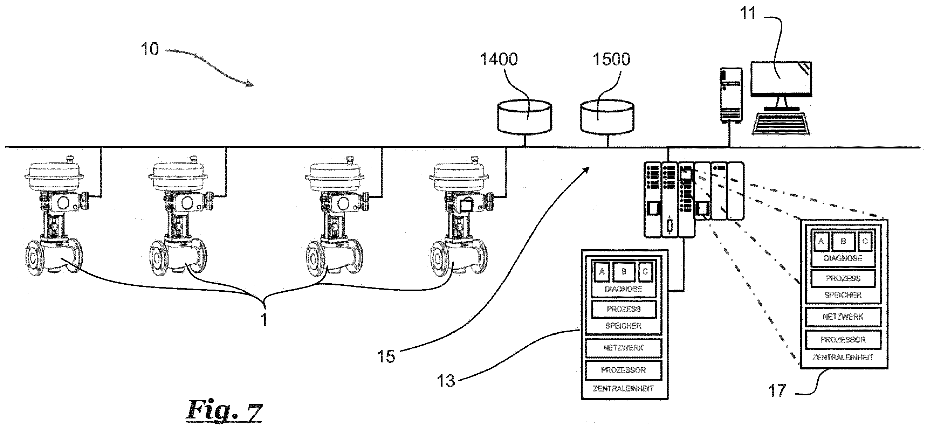

Fig. 7 bildet schematisch eine prozesstechnische Anlage 10 ab. Es sei klar, dass die nachfolgend beschriebenen Schritte eines erfindungsgemäßen Diagnoseverfahrens zumindest teilweise während des laufenden Betriebs, insbesondere während des laufenden Steuerung- und/oder Regelungsbetriebs, einer prozesstechnischen Anlage 10 durchgeführt werden, vorzugsweise ohne Beeinträchtigung, Störung oder Pause des laufenden Betriebs der prozesstechnischen Anlage 10.

Die prozesstechnische Anlage kann beispielsweise über eine Leitwarte 17 verfügen, die zur zentralen Steuerung und/oder Regelung der Prozesse der Anlage 10 ausgelegt und eingerichtet ist. Verfahren zur Steuerung- und/oder Regelung prozesstechnischer Anlage sowie deren Komponenten, insbesondere Stellgeräte, sind dem Fachmann bekannt. Zur Vereinfachung der Lesbarkeit und besseren Verständlichkeit des erfindungsgemäßen Diagnoseverfahrens wird nachfolgend im Allgemeinen verzichtet auf Erläuterungen des normalen Steuerung- und/oder Regelungsbetriebs.

Alternativ oder zusätzlich kann zur Durchführung des Diagnoseverfahrens die prozesstechnische Anlage in einem Testbetrieb betrieben werden. Während dem Betreiben der prozesstechnischen Anlage im Testbetrieb kann der betriebsgemäße Steuerung- und/oder Regelungsbetrieb vollständig pausieren oder eingeschränkt erfolgen. Alternativ ist es denkbar, dass ein Testbetrieb während des normalen Steuerung- und/oder Regelungsbetriebs stattfindet, jedoch unter der Maßgabe, dass durch den Testbetrieb keine Beeinträchtigung des normalen Betriebs stattfindet, oder lediglich eine tolerierbare Beeinträchtigung des normalen Betriebs stattfindet, und/oder dass unter vorbestimmten Abbruchbedingungen Testbetrieb unverzüglich beendet wird.

Figur 1 stellt vereinfacht einen schematischen Ablauf eines erfindungsgemäßen Diagnoseverfahrens 100 dar. Gemäß einer nicht näher dargestellten alternativen Ausgestaltung ist es denkbar, dass das erfindungsgemäße Diagnoseverfahren 100 initiiert wird durch einen Aktivierungsbefehl, was beispielsweise durch eine manuelle Eingabe an einer Benutzerschnittstelle 11 der prozesstechnischen Anlage 10 oder einer Fernwartungseinrichtung für die prozesstechnische Anlage 10 erfolgen kann.

Gemäß der in Figur 1 abgebildeten Ausführung wird das Verfahren eingeleitet in Reaktion auf die Erfassung 200 einer System-Ist-Eigenschaft. Die Erfassung 200 kann beispielsweise während des laufenden Normalbetriebs der prozesstechnischen Anlage erfolgen. Eine System-Ist-Eigenschaft bezeichnet beispielsweise einen digitalen oder analogen Messwert, ein binäres Zustandssignal oder ein anderes diskretes Zustandssignal, z.B.: Motorschalter ON, OFF, REP. Bezogen auf das Stellgerät 1, das hier exemplarisch als pneumatisch betätigtes Stellventil 1 beschrieben ist, kann eine System-Ist-Eigenschaft ein Stellsignal s, wie ein elektrisches (digitales oder analoges) Soll-Stellungs-Signal, und/oder einen Messwert x, wie eine ist-Stellung, ein ist-Druck oder dergleichen, ein Zustandssignal z, wie ein Endanschlag-Taster-Signal, ein Not-aus-Signal oder dergleichen, umfassen. Alternativ oder zusätzlich kann eine System-Ist-Eigenschaft wenigstens abgeleitete Eigenschaft umfassen, also im Allgemeinen eine auf das Stellgerät bezogene Eigenschaft, welche auf Basis vorliegender Messwerte, Stellsignale und/oder Zustandssignale berechnet wird. Eine abgeleitete Eigenschaft α kann zum Beispiel ein von einer Stellgerätelektronik des Stellgerätes 1 berechneter Diagnosewert, beispielsweise eine Stellstangenreibung oder dergleichen, sein. Insbesondere kann eine (abgeleitete) System-Ist-Eigenschaft α wenigstens eine Fehlermeldung und/oder Warnmeldung bezüglich des Stellgerätes 1 umfassen.

Die Erfassung 200 kann erfolgen durch einen nachfolgend als Diagnoseelektronik bezeichneten Prozessor oder Computer 13, der nicht Teil des Stellgerätes 1, jedoch signalübertragungsgemäß mit diesem verbunden ist, beispielsweise über ein lokales Netzwerk 15. Alternativ ist es denkbar, dass ein Stellgerät 1 einer prozesstechnischen Anlage die Erfassung 200, bezogen auf andere Stellgeräte 1 und/oder sich selbst, durchführt (nicht näher dargestellt), also das Stellgerät 1 selbst die Diagnoseelektronik realisiert. Gemäß einer weiteren Alternative kann die Diagnoseelektronik in Funktionsunion mit einer Leitwarte 17 realisiert sein.

Bei der Erfassung 200 einer System-Ist-Eigenschaft kann es bevorzugt sein, dass die System-Ist-Eigenschaft mit einem dazugehörigen Zeitpunkt, beispielsweise in Form eines Zeitstempel, erfasst wird 200, beispielsweise um verschiedene System-Ist-Eigenschaften s, x, z, α des Steuer- und/oder Regelungssystems aus unterschiedlichen Quellen, beispielsweise verschiedenen Stellgeräten 1, miteinander zeitlich korrelieren zu können.

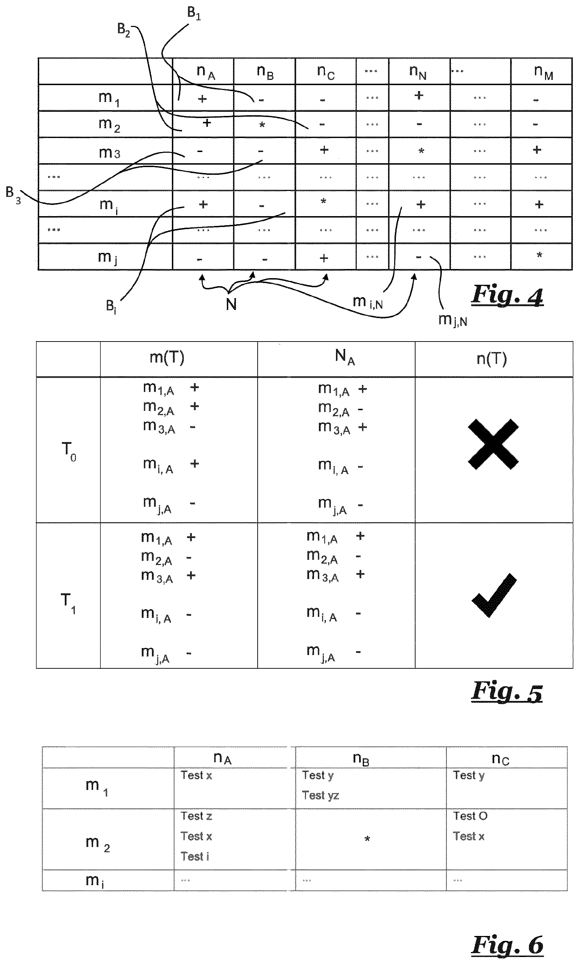

Sodann ist in einem späteren Schritt 300 vorgesehen, dass bestimmt wird, ob die in dem vorigen Schritt 200 erfasste(n) System-Ist-Eigenschaft(en) s, x, z, α die notwendige Bedingung Bᵢ einer vorbestimmten System-Referenz-Eigenschaft m erfüllt bzw. erfüllen. Es ist denkbar, dass sich aus einer oder mehreren, insbesondere abgeleiteten, System-Ist-Eigenschaft(en) s, x, z, α unmittelbar oder implizit ergibt, ob eine notwendige Bedingung B einer ersten System-Referenz-Eigenschaft m erfüllt ist. Auf die Durchführung von Schritt 300 wird nachfolgend unter Bezugnahme auf Fig. 5 im Detail eingegangen. Die in Schritt 300 bestimmte erste System-Referenz-Eigenschaft m kann als erstes Symptom bezeichnet werden. Eine System-Referenz-Eigenschaft kann beispielsweise ein Warnsymptom oder ein Fehlersymptom sein. Die System-Referenz-Eigenschaft kann beispielsweise bezogen sein auf die gesamte prozesstechnische Anlage, einen funktionellen oder räumlichen Abschnitt der prozesstechnischen Anlage, ein einzelnes oder mehrere Stellgeräte.

Ausgehend von dem in dem vorigen Schritt 300 bestimmten ersten Symptom m wird in einem anschließenden Schritt 400 ermittelt, welche möglichen Zustandsursachen n das erste Symptom m verursacht haben könnten. Zu diesem Zweck kann der Computer 13 auf eine Diagnosedatenbank 1400 (kann auch im Stellgerät sein) zugreifen. Die Bereitstellung und Verwendung der Diagnosedatenbank 1400 wird nachfolgend unter Bezug auf Fig. 4 näher erläutert.

Fig. 4 bildet den Inhalt einer Diagnosedatenbank 1400 schematisch ab. Die Diagnosedatenbank 1400 enthält eine Korrelation zwischen einerseits mehreren verschiedenen Symptomen m und andererseits zahlreichen verschiedenen Zustandsursachen n. In der Diagnosedatenbank 1400 ist jeder Zustandsursache n ein Satz N umfassend mehrere verschiedene Symptome m zugeordnet. Die in Figur 4 abgebildeten Matrix trifft eine Aussage darüber, welcher Symptom-Satz N durch welche Zustandsursache n verursacht wird.

Ein Symptom m_{i,N} in einem Satz N kann einer Zustandsursache n_{N} dergestalt positiv zugeordnet sein, dass ein kausaler Zusammenhang zwischen dieser vorbestimmten Zustandsursache n_{N} und dem Vorliegen des vorbestimmten Symptoms m_{i,N} besteht. Die vorbestimmte Zustandsursache n_{N} hat das ihr zugeordnete das vorbestimmte positive Symptom m_{i,N} zur Folge. Alternativ oder zusätzlich kann einem anderes Symptom m_{j,N} in einem Satz N ein der Zustandsursache n_{N} dergestalt negativ zugeordnet sein, dass ein kausaler Zusammenhang zwischen dieser vorbestimmten Zustandsursache und dem Nichtvorliegen des vorbestimmten negativen Symptoms m_{j,N} besteht. Die vorbestimmte Zustandsursache n hat zur Folge, dass ein ihr zugeordnetes vorbestimmtes negatives Symptom m_{j,N} nicht auftritt. Wenn sämtliche positive Symptome m des Satzes N einer vorbestimmten Zustandsursache n vorliegen und sämtliche negative Symptome m dieses Satzes N nicht vorliegen, kann daraus eindeutig auf die Präsenz der Satzes N zugeordneten Zustandsursache n geschlussfolgert werden.

Optional kann hinsichtlich einer Zustandsursache definiert sein, falls ein Symptom in keinem kausalen Zusammenhang zu dieser Zustandsursache steht, oder anders gesagt die Zustandsursache für die System-Referenz-Eigenschaft irrelevant ist. In Figur 4 sind positive Korrelationen zwischen einer Zustandsursache und einem Symptom mit einem "+" angedeutet und negative Korrelationen mit einem "-". Sofern eine Korrelation zwischen einem Symptom und einer Zustandsursache vorliegt, ist dieses Symptom im Hinblick auf die Erkennung der Zustandsursachen notwendig. Das *-Symbol markiert nicht aussagekräftige Zustandsursache/Symptom-Beziehungen. Bei einer nicht aussagekräftigen Zustandsursachen/Symptom-Beziehung ist dieses Symptom in Bezug auf die jeweilige Zustandsursache nicht notwendig. Es ist denkbar, dass eine weitere "optionale" Kategorie (hier nicht näher dargestellt) hinsichtlich der Beziehungen zwischen einem Symptom und einer Zustandsursache in der Diagnosedatenbank 1400 vermerkt sein kann, falls das optionale Symptom zwar nicht zwingend zur Erkennung einer Zustandsursache erforderlich ist, jedoch die Aussagekraft der Diagnose auf Basis der Diagnosedatenbank 1400 verbessern kann.

Fig. 5 bildet schematisch eine zeitabhängige Erkennung des Bestehens oder Nichtbestehens einer Zustandsursache n_{A} in Abhängigkeit von den dieser Ursache zugeordneten Satz N_{A} vorbestimmter System-Referenz-Eigenschaften m_{1,A} bis m_{n,A} ab. Zum den Zeitpunkten T₀ und T₁ sind alle hinsichtlich der Ursache n_{A} relevanten System-Referenz-Eigenschaften bestimmt.

Beispielsweise ist das erste hinsichtlich der Zustandsursache n_{A} relevante Symptom m_{1,A} zu beiden Zeitpunkten T₀ und T₁ als vorliegend bestimmt. Zu beiden Zeitpunkten T₀ und T₁ kann also durch die Diagnoseelektronik festgestellt beziehungsweise bestimmt werden, dass die der ersten System-Referenz-Eigenschaft m_{1,A} zugeordnete Bedingung B₁ erfüllt ist. Hingegen ist das zweite hinsichtlich der Zustandsursache n_{A} relevante Symptom m_{2,A} zu beiden Zeitpunkten bestimmt, zum Zeitpunkt T₀ als vorliegend bestimmt und zum Zeitpunkt T₁ als nicht vorliegend bestimmt. Das dritte hinsichtlich der Zustandsursache n_{A} relevante Symptom m_{3,A} zu beiden Zeitpunkten bestimmt, zum Zeitpunkt T₀ als nicht vorliegend bestimmt und zum Zeitpunkt T₁ als vorliegend bestimmt. Durch die Diagnoseelektronik wird folglich zum Zeitpunkt T₀ das Nichtbestehen der Zustandsursache n_{A} bestimmt. Zum Zeitpunkt T₁ entsprechen alle der Zustandsursache n_{A} zugeordneten System-Referenz-Eigenschaften m_{1,A} bis m_{1,n} dem Satz N_{A}. Somit wird durch die Diagnoseelektronik zum Zeitpunkt T₁ das Bestehen der Zustandsursache n_{A} bestimmt.

Zurückkehrend zu Figur 1 kann ausgehend von dem ersten Symptom m nach der Bestimmung der ihm zugeordneten möglichen Zustandsursachen n in Schritt 400 sodann erkannt werden, ob sämtliche Symptome beziehungsweise System-Referenz-Eigenschaften der verschiedenen Sätze N der jeweiligen Zustandsursachen n bestimmt oder unbestimmt sind.

Zu einem bestimmten Symptom liegen hinreichend aktuelle Informationen vor, um eine eindeutige Feststellung zu erlauben, ob dieses Symptom vorliegt oder nicht vorliegt. Wenn sämtliche Symptome eines Satzes N bestimmt sind, kann sodann anhand der positiven und/oder negativen Korrelationen zwischen den Symptomen des Satzes und der dem Satz zugeordneten Zustandsursache eindeutig auf das Bestehen oder Nichtbestehen dieser Zustandsursache geschlussfolgert werden.

Zu einem unbestimmten Symptom, das auch als offenes Symptom oder zweite (offene) System-Referenz-Eigenschaft bezeichnet werden kann, liegende Diagnoseelektronik, die das Diagnoseverfahren 100 durchführt, keine hinreichenden aktuellen Informationen vor. Beispielsweise können der Diagnoseelektronik keinerlei Informationen bezüglich der zweiten System-Referenz-Eigenschaft vorliegen. Alternativ können der Diagnoseelektronik veraltete, nicht länger aktuelle, Informationen bezüglich der zweiten System-Referenz-Eigenschaft vorliegen. Falls ein Satz N ein unbestimmtes Symptom oder mehrere unbestimmte Symptome enthält, kann die Diagnoseelektronik nicht schlussfolgern, ob die dem Satz zugeordnete Zustandsursache n besteht oder nicht besteht.

Bei dem erfindungsgemäßen Diagnoseverfahren wird im Anschluss an den Schritt 400 der Schritt 500 durchgeführt, gemäß dem bezüglich der unbestimmten Symptome oder offenen, zweiten System-Referenz-Eigenschaften alle geeigneten Diagnosetests aufgelistet werden. Für eine zweite System-Referenz-Eigenschaft mₓ kann anhand einer Testdatenbank 1500 wenigstens ein Diagnosetest t ermittelt werden, der geeignet ist, um die zweite System-Referenz-Eigenschaft zu bestimmen. Diesbezüglich wird auf die nachfolgenden Ausführungen zu Fig. 6 verwiesen.

Fig. 6 zeigt eine tabellarische Darstellung, in der den verschiedenen Symptomen m zugeordnete Diagnosetests t wiedergegeben sind. Wie in Figur 6 abgebildet, kann optional verknüpft mit der Zuordnung von Symptom m und Diagnosetest t zusätzlich eine Zuordnung zu einer oder mehreren dem jeweiligen Symptom m zugeordneten Zustandsursache n vorgesehen sein. Die Diagnoseelektronik kann ausgehend von der Testdatenbank 1500 einen oder mehrere geeignete Diagnosetests t ermitteln, um eine Bestimmung offener System-Referenz-Eigenschaften mₓ durchzuführen.

Wiederum bezugnehmend auf Fig. 1 kann im Anschluss an die Ermittlungen 500 wenigstens eines geeigneten Diagnosetests t durch die Diagnoseelektronik veranlasst werden, dass in einem nachfolgenden Schritt 600 dieser Diagnosetest t durchgeführt wird beziehungsweise diese Diagnosetests t durchgeführt werden. Die Durchführung des Diagnosetest t in Schritt 600 kann von einem auslösenden Ereignis 601 abhängig gemacht werden. Ein auslösendes Ereignis 601 kann beispielsweise eine Freigabe eines oder mehrerer Tests t durch Leitwarte 17 beim Vorliegen eines geeigneten Systemzustandes oder einer manuelle Benutzerfreigabe an der Schnittstelle 11 sein. Zusätzlich oder alternativ kann als auslösendes Ereignis 601 eine planmäßige, beispielsweise regelmäßige, in zufälligen Abständen erfolgende, oder beim Vorliegen vorbestimmter Zustände der prozesstechnischen Anlage vorgesehene Durchführung eines vorbestimmten Diagnosetests t sein.

Falls mehrere Diagnosetests t in Schritt 500 ermittelt wurden, kann bevorzugt sein, dass die mehreren Diagnosetests t sukzessive nacheinander durchgeführt werden. Zu diesem Zweck kann die Diagnoseelektronik veranlassen, dass entsprechende Diagnosetest-Stellsignale st bereitgestellt werden, um einen gewünschten Diagnosetest t bezüglich eines Stellgerätes 1 oder mehrerer Stellgeräten durchzuführen. Die in Reaktion auf den Diagnosetest t auftretenden System-Ist-Eigenschaften, beispielsweise in Form von Messwerten xₜ oder Zustandssignalen zₜ, die infolge der Durchführung 600 des Diagnosetests t auftreten, werden wiederum erfasst. Auf Basis der erfassten System-Ist-Eigenschaften kann, wie oben beschrieben, nunmehr anhand der jeweiligen Bedingungen B der dem durchgeführten Diagnosetest t zugeordneten zweiten System-Referenz-Eigenschaft mₓ eine Bestimmung dieser zweiten System-Referenz, Eigenschaft mₓ erfolgen. Nachdem alle vormals offenen zweiten System-Referenz-Eigenschaft mₓ nach der Durchführung 600 der erforderlichen Diagnosetests t bestimmt sind, kann mithilfe des zugehörigen Satzes N sodann in einem nachfolgenden Diagnoseschritt 700 erkannt werden, ob eine vermutete Zustandsursache n besteht oder nicht.

In Schritt 500 können die durchzuführenden Diagnosetests t beispielsweise unter der Maßgabe priorisiert werden, dass solche Diagnosetests t vorrangig durchgeführt werden, die besonders vielen offenen zweiten System-Referenz-Eigenschaften anhand der Testdatenbank 1500 zugeordnet sind. Alternativ können solche Diagnosetests t vorrangig durchgeführt werden, die unter Berücksichtigung der Diagnosedatenbank 1400 und der Testdatenbank 1500 mit möglichst geringem Testaufwand, beispielsweise möglichst geringe Testanzahl, möglichst geringer Testdauer und/oder möglichst wenig aufwändigen Testbedingungen, eine Aussage über das Bestehen oder Nichtbestehen wenigstens einer Zustandsursache erlauben.

Beispielsweise kann in Schritt 300 das erste Symptom m "große bleibende Regelabweichung in der Kolbenhubregelung" bestimmt werden. Dieses Symptom kann darauf hindeuten, dass entweder die Zustandsursache n_{E} "kein Zuluftdruck" oder n_{F} "Blockade des Kolbenhubes (zum Beispiel Verunreinigungen im Kolbenschieber)" besteht. Diesen beiden Zustandsursachen n_{E}, n_{F} ist in der Diagnosedatenbank 1400 die zweite System-Referenz-Eigenschaft m_{X} "aktueller Messwert am Zuluftdrucksensor < 0, 1 bar" einerseits positiv und andererseits negativ zugeordnet. Anhand der Testdatenbank 1500 ist der zweiten System-Referenz-Eigenschaft ein Diagnoseverfahren zugeordnet, dass ausgehend von der System-Ist-Eigenschaft in Form eines auf den Zuluftdruck bezogenen Druck-Messwerts erkennt, ob die Bedingung "Zuluftdruck < 0,1 bar" erfüllt oder nicht erfüllt ist. Wenn in Schritt 400 erkannt wird, dass diese Bedingung aktuell nicht bestimmt ist, kann in Schritt 500 auf Basis der Testdatenbank 1500 der relevante Diagnosetest ermittelt werden. Der Diagnosetest kann in dem Folgeschritt 600 durchgeführt werden. Der auf den Zuluftdruck bezogene Messwert kann erfasst werden und hinsichtlich der Bedingung analysiert werden, um das Symptom mₓ zu bestimmen. Wenn der Zuluftdruck-bezogene Messwert einen Zuluftdruck kleiner als 0,1 bar repräsentiert, ist das Symptom mₓ erfüllt, anderenfalls ist es nicht erfüllt. Beim Vorliegen des Symptoms mₓ wird die Diagnoseelektronik dann in Schritt 700 erkennen, dass die Zustandsursache n_{E} vorliegt, anderenfalls, dass die Zustandsursache n_{F} vorliegt.

Fig. 2 zeigt eine detailliertere schematische Darstellung einer Ausführung eines Diagnoseverfahrens 100 als Fig. 1. Von der Darstellung gemäß Fig. 1 unterscheidet sich das in Fig. 2 dargestellte Diagnoseverfahren im Wesentlichen nur dadurch, dass die Schritte 300 und 400 in Teilschritte untergliedert sind. Schritt 300 umfasst die Teilschritte 310 und 330. Schritt 400 umfasst die Teilschritte 410 und 430 sowie gegebenenfalls 420. Im Übrigen wird auf die Beschreibung bezüglich Fig. 1 verwiesen.

Fig. 2 stellt zunächst die in Schritt 200 erfolgende Erfassung wenigstens einer System-Ist-Eigenschaft dar. Ausgehend von der erfassten System-Ist-Eigenschaft wird sodann in Schritt 310 zunächst eine Zuordnung der erfassten System-Ist-Eigenschaft zu wenigstens einer korrespondierenden System-Referenz-Eigenschaft m vorgenommen. Dies kann beispielsweise erfolgen, indem eine Diagnoselogik oder Analyselogik der prozesstechnischen Anlage 10 oder eines ihrer Stellgeräten 1 unter Rückgriff auf einen oder mehreren System-ist-Eigenschaften, wie ein Messwert x, ein Zustandssignal z, ein Stellsignal s und/oder eine abgeleitete System-Ist-Eigenschaft α ausgeführt wird. Bei der Zuordnung 310 wird geprüft, ob eine vorbestimmte notwendige Bedingung B der jeweiligen System-Referenz-Eigenschaft m vorliegt oder nicht vorliegt.

Wenn für eine erste System-Referenz-Eigenschaft m in Teilschritt 310 bestimmt wurde, dass ihre Bedingung erfüllt wird, wird anschließend in Teilschritt 330 unter Rückgriff auf die Diagnosedatenbank 1400 eine Prüfung durchgeführt, welcher oder welchen möglichen Zustandsursachen n dieser System-Referenz-Eigenschaft m zugeordnet werden kann.

Sofern eine einzelne System-Referenz-Eigenschaft eindeutig einer einzigen Zustandsursache zugeordnet ist, ist es nicht erforderlich, dass erfindungsgemäße Diagnoseverfahren 100 durchzuführen. Für derartige triviale Fälle mit eindeutiger kausaler Zuordnung einer bestimmten Zustandsursache einer einzelnen bestimmten System-Referenz-Eigenschaft sind dem Fachmann gemeinhin bekannte, nicht erfindungsgemäße Diagnoseverfahren ausreichend.

Im Rahmen des erfindungsgemäßen Diagnoseverfahrens 100 sind insbesondere solche Zuordnungen 330 relevant, bei denen ausgehend von der einen ersten System-Referenz-Eigenschaft m, die in Teilschritt 310 bestimmt wurde, eine Vielzahl verschiedener möglicher Zustandsursachen n infrage kommen.

Nachfolgend wird in Teilschritt 410 hinsichtlich dieser möglichen Zustandsursachen n unter Rückgriff auf die Diagnosedatenbank 1400 ermittelt, welche anderen notwendigen System-Referenz-Eigenschaften mᵢ, mⱼ den in Teilschritt 330 identifizierten möglichen Zustandsursachen n anhand eines jeweiligen Satzes N zuzuordnen sind. In Teilschritt 410 kann implizit oder explizit im Sinne eines Ausschlussverfahrens identifiziert werden, welche System-Referenz-Eigenschaften irrelevant Bezug auf die in Teilschritt 330 identifizierten Zustandsursachen n sind. Zusätzlich kann in einem optionalen Teilschritt 420 ermittelt werden, welche optionalen System-Referenz-Eigenschaften den in Schritt 330 identifizierten möglichen Zustandsursachen n überdies anhand des jeweiligen Satzes N zuzuordnen sind.

Nachdem Teilschritt 410 (sowie gegebenenfalls Teilschritt 420) durchgeführt wurde, wird in Teilschritt 430 bezüglich der auf die in Teilschritt 330 identifizierten möglichen Zustandsursachen n ermittelt, welche der notwendigen System-Referenz-Eigenschaften m der jeweiligen Sätze N bestimmt sind, also welche der System-Referenz-Eigenschaften m eindeutig vorliegen oder nicht vorliegen.

Wenn ausgehend von Teilschritt 430 sämtliche notwendige Symptome m eines Satzes N einer möglichen Zustandsursache n bestimmt sind, kann Bezug auf diese Zustandsursache n unmittelbar anschließenden Teilschritt 430 Schritt 700 durchgeführt, also ausgehend von den bestimmten System-Referenz-Eigenschaften m auf Basis der Diagnosedatenbank 1400 die korrespondierende Zustandsursache n als eindeutig Bestehend oder Nichtbestehend erkannt wird.

Für die Durchführung des erfindungsgemäßen Verfahrens 100 ist in Teilschritt 430 insbesondere der Fall relevant, gemäß welchem wenigstens eine System-Referenz-Eigenschaft m wenigstens eines Satzes N der zuvor in Schritt 330 als möglich identifizierten (und nicht bereits in einem Schritt 700 als nicht bestehend ausgeschlossenen) Zustandsursachen n als unbestimmt erkannt wird. Bezüglich dieser unbestimmten oder offenen, zweiten System-Referenz-Eigenschaft mₓ wird ausgehend von Teilschritt 430 anschließend Schritt 500 durchgeführt. In Schritt 500 wird für wenigstens ein nicht bestimmtes Symptom mₓ ein in diesem unbestimmten Symptom mₓ zugeordneter Diagnosetest t auf Basis der Testdatenbank 1500 durch die Diagnoseelektronik erkannt.

Die Diagnoseelektronik kann in einem weiteren Schritt 600 veranlassen, dass wenigstens ein in Schritt 500 erkannter Diagnosetest t durchgeführt wird. Wie oben beschrieben werden während der Durchführung 600 des Tests die System-Ist-Eigenschaften ermittelt, welche erforderlich sind, um zu bestimmen, ob die notwendige Bedingung wenigstens einer System-Referenz-Eigenschaft vorliegt oder nicht vorliegt. In Fig. 2 ist für diese Ermittlung ein Teilschritt 610 abgebildet. Während dem Teilschritt 610 werden alle Analyse- und/oder Diagnosemethoden zur Anwendung gebracht, die erforderlich sind, um die System-Ist-Eigenschaften in Bezug auf die notwendige Bedingung einer System-Referenz-Eigenschaft zu prüfen. Nachdem auf Basis wenigstens eines zusätzlich durchgeführten Diagnosetests t wenigstens eine weitere System-Referenz-Eigenschaft mₓ bestimmt worden ist, kann Schritt 700 wiederum durchgeführt werden.

Es sei klar, dass die oben beschriebenen Schritte und/oder Teilschritte, sofern nicht ausdrücklich anders angegeben, in beliebiger Reihenfolge und/oder zumindest teilweise simultan durchgeführt werden können. Es sei klar, dass in Bezug auf verschiedene System-Referenz-Eigenschaften eine zumindest teilweise simultane Durchführung der vorgenannten Schritte und/oder Teilschritte erfolgen kann.

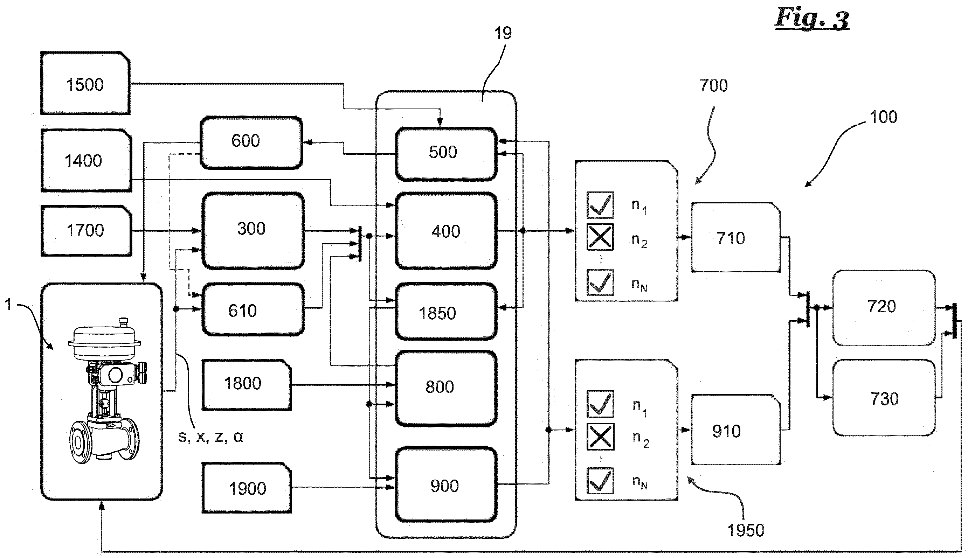

Fig. 3 zeigt eine komplexe Ausführung eines erfindungsgemäßen Diagnoseverfahrens 100. die in Fig. 3 dargestellte komplexe Ausführung unterscheidet sich von den zuvor bezugnehmend auf die Figs. 1 und 2 beschrieben Ausführungen im Wesentlichen dadurch, dass die Diagnoseelektronik 19 dazu ausgelegt und eingerichtet ist, eine Identifikation 800 von Historien-Symptomen durchzuführen und/oder eine zukunftsbezogene Prädikation 900 durchzuführen. Alternativ oder zusätzlich kann die Diagnoseelektronik 19 dazu ausgelegt und eingerichtet sein, auf Basis einer eindeutigen Identifikation einer Zustandsursache 700 eine Handlungsanweisung 710 zur Behandlung dieser Zustandsursache 700 zu bestimmen.

Das System zur Datenverarbeitung oder die Diagnoseelektronik 19 kann signalübertragensgemäß über wenigstens eine Randbedingung-Datenbank 1700 in Bezug auf wenigstens ein Stellgerät 1, einen Abschnitt der prozesstechnischen Anlage 10 oder die gesamte prozesstechnische Anlage 10 verfügen. Die Randbedingungs-Datenbank 1700 kann beispielsweise bei dem Schritt 300 zur Bestimmung eines Symptoms berücksichtigt werden.

Zur Umsetzung der Identifikation 800 von Historien-Symptomen kann die Diagnoseelektronik 19 mit wenigstens einer Datenbank 1850 ausgestattet sein, die Informationen zur zumindest teilweisen oder vollständigen Historie wenigstens eines Symptoms, mehrerer Symptome oder aller Symptome und/oder Zustandsursachen umfasst. Es kann vorgesehen sein, dass die Datenbank 1850 des Produktes kontinuierlich mit Daten gespeist wird, die beispielsweise bei der Ermittlung 300 eines ersten Symptoms und/oder bei der Ermittlung 400 eines offenen, zweiten Symptoms verarbeitet werden. Alternativ oder zusätzlich kann zur Umsetzung der Historien-Diagnosefunktion 800 eine Historien-Regelwerk-Datenbank 1800 bereitgestellt werden, auf welche die Diagnoseelektronik 19 zugreifen kann, um Historien-Symptome zu identifizieren 800. Die Historien-Regelwerk-Datenbank 1800 kann beispielsweise eine Wenn-Dann-Logik abbilden. Die Historien-Regelwerk-Datenbank 1800 kann beispielsweise dazu eingerichtet sein, dass eine bestimmten Zustandsursache und/oder ein bestimmtes Historien-Symptom unter dem Umstand identifiziert wird 800, wenn zuerst ein vorbestimmtes erstes Symptom auftritt und chronologisch später ein vorbestimmtes zweites Symptom auftritt.

Ausgehend vom Identifizieren 800 von Historien-Symptomen kann wenigstens eine System-Referenz-Eigenschaft bestimmt werden, ausgehend von welcher das weitere Diagnoseverfahren 100 eingeleitet werden kann. Beispielsweise kann ausgehend von einer temporalen Bedingung, wonach mehrere vorbestimmte System-Ist-Eigenschaften und/oder System-Referenz-Eigenschaften, die in einer gemäß einer in dem Historien Regelwerk 1800 definierten Abfolge, insbesondere zumindest teilweise simultan, auftreten, eine vorbestimmte System-Referenz-Eigenschaft, beispielsweise ein Fehlersymptom oder ein Warnsymptom, zur Folge haben. Auf Basis des Historienregelwerks 1800 kann die Identifizierung 800 auch berücksichtigen, falls eine bestimmte definierte Abfolge von Zustandsursachen auftritt, gegebenenfalls in Kombination mit einem oder mehreren vorbestimmten System-Ist-Eigenschaften und/oder System-Referenz-Eigenschaften, und ausgehend von einer solchen Abfolge eine entsprechende System-Referenz-Eigenschaft erkennen.

Die zukunftsbezogene Prädikation 900 kann dazu ausgelegt und eingerichtet sein, ausgehend von einer Datenbank 1900, die ein Prädikations-Regelwerk enthält, und/oder ausgehend von der Historien-Datenbank 1850, eine Vorhersage 1950 im Hinblick auf künftig zu erwartende Ereignisse, Zustandsursachen und/oder System-Referenz-Eigenschaften vorzunehmen. Ausgehend von der Vorhersage 1950 kann zudem eine Handlungsanweisung 910 bereitgestellt werden.

Die gegenwartsbezogene Handlungsanweisung 710 und/oder die zukunftsbezogene Handlungsanweisung 910 kann die Diagnoseelektronik 19 veranlassen, ein Stellgerät 1 oder die prozesstechnische Anlage 10 entsprechend der Handlungsanweisung 710 oder 910 zu betätigen 720. Alternativ oder zusätzlich kann eine manuelle Handlung 730 entsprechend einer der Handlungsanweisungen 710 oder 910, beispielsweise ein Austausch eines Verschleißteiles in einem Stellgerät 1, veranlasst werden, beispielsweise durch Ausgabe einer entsprechenden Aufforderung an der Benutzerschnittstelle 11.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

## Patentansprüche

1. Verfahren (100) zur Diagnose eines Steuer- und/oder Regelungssystems einer prozesstechnischen Anlage (10) mit wenigstens einem Stellgerät (1) zum Einstellen eines Prozessfluids, umfassend die Schritte
a) Bereitstellen einer Diagnosedatenbank (1400), die eine Zuordnung mehrerer Zustandsursachen (n) zu je einem Satz umfassend mehrere vorbestimmte System-Referenz-Eigenschaften (m) umfasst, wobei jeder System-Referenz-Eigenschaft eine notwendige Bedingung (B) zugeordnet wird;
b) Bereitstellen einer Testdatenbank (1500), die eine Zuordnung verschiedener Diagnosetests (t) zu je wenigstens einer vorbestimmten System-Referenz-Eigenschaft (m) umfasst;
c) Erfassen (200) wenigstens einer System-Ist-Eigenschaft (s, x, z, α)des Steuer- und/oder Regelungssystems;
d) Bestimmen wenigstens einer ersten System-Referenz-Eigenschaft (m), deren Bedingung (B) durch die wenigstens eine in Schritt (c) erfasste System-Ist-Eigenschaft (s, x, z, α) erfüllt wird;
e) auf Basis der Diagnosedatenbank (1400) wird für wenigstens eine Zustandsursache (n), deren Satz (N) vorbestimmter System-Referenz-Eigenschaften (m) die in Schritt (d) bestimmte erste System-Referenz-Eigenschaft (m) umfasst, für wenigstens eine zweite System-Referenz-Eigenschaft (mₓ) dieses Satzes (N) erkannt, insbesondere anhand der wenigstens einen in Schritt (c) erfassten System-Ist-Eigenschaft(-en) (s, x, z, α), ob die der zweiten System-Referenz-Eigenschaft (mₓ) zugeordnete Bedingung (B) (i) bestimmt ist, vorzugsweise erfüllt wird oder nicht erfüllt wird, oder (ii) unbestimmt ist;
f) Ermitteln wenigstens eines Diagnosetests (t) auf Basis der Testdatenbank (1500) korrespondierend zu der wenigstens einen zweiten System-Referenz-Eigenschaft (mₓ) mit einer in Schritt (d) als unbestimmt erkannten notwendigen Bedingung (B).

2. Verfahren nach Anspruch 1, ferner umfassend einen Schritt (g), in dem der wenigstens eine in Schritt (f) bestimmte Diagnosetest (t) durchgeführt wird, um eine zu der zweiten System-Referenz-Eigenschaft (mₓ) korrespondierende System-Ist-Eigenschaft (s, x, z, α) zu erfassen und darauf basierend die zugeordnete notwendige Bedingung (B) zu bestimmen, insbesondere zu bestimmen, ob durch diese System-Ist-Eigenschaft (s, x, z, α) die notwendige Bedingung der zweiten System-Referenz-Eigenschaft (mₓ) (i) erfüllt oder (ii) nicht erfüllt wird.

3. Verfahren nach Anspruch 2, wobei der Diagnosetest in Schritt (g) erst in Anschluss an eine Bedienerfreigabe (601) ausgeführt wird.

4. Verfahren nach einem der vorstehenden Ansprüche, wobei in Schritt (f) ein Diagnosetest (t) bezüglich einer Zustandsursache (n) bestimmt wird, von deren Satz (N) System-Referenz-Eigenschaften (m) wenigstens eine vorliegt, insbesondere mehrere vorliegen, wobei insbesondere nur eine einzige zweite System-Referenz-Eigenschaft (mₓ) des Satzes (N) unbestimmt ist.

5. Verfahren nach einem der vorstehenden Ansprüche, wobei in Schritt (f) ein Diagnosetest bestimmt wird, der zu wenigstens einer zweiten System-Referenz-Eigenschaft (mₓ) korrespondiert, die wenigstens zwei verschiedenen Zustandsursachen zugeordnet ist.

6. Verfahren nach einem der Ansprüche 2 bis 5, wobei in einem weiteren Schritt (h) ausgehend von der in Schritt (g) bestimmten System-Referenz-Eigenschaft (m) und der Diagnosedatenbank (1400) eine korrespondierende Zustandsursache (n) erkannt wird.

7. Verfahren nach Anspruch 6, wobei auf Basis der in Schritt (h) erkannten Zustandsursache (n) eine auf diese Zustandsursache (n) bezogene Zustandsmitteilung, wie eine Handlungsempfehlung (710, 910), Warnmitteilung oder Fehlermitteilung, bereitgestellt wird.

8. Verfahren nach Anspruch 6 oder 7, wobei auf Basis der in Schritt (h) erkannten Zustandsursache (n) eine auf diese Zustandsursache (n) bezogene Handlungsanweisung (710) bereitgestellt und dem Steuer- und/oder Regelungssystem übermittelt (720, 730) wird, wobei insbesondere die Handlungsanweisung (710, 910) dieser Zustandsursache (n) und/oder einer dieser Zustandsursache (n) zugeordneten System-Referenz-Eigenschaft (m) entgegenwirkt.

9. Verfahren nach einem der vorstehenden Ansprüche, wobei in Schritt (c) wenigstens eine System-Ist-Eigenschaft (s, x, z, α) im laufenden Steuer- und/oder Regelungsbetrieb des Steuer- und/oder Regelungssystems erfasst wird.

10. Verfahren nach einem der vorstehenden Ansprüche, wobei in Schritt (c) wenigstens eine System-Ist-Eigenschaft (s, x, z, α) in einem Testbetrieb des Steuer- und/oder Regelungssystems erfasst wird, insbesondere indem planmäßig und/oder regelmäßig ein Diagnosetest durchgeführt wird (600).

11. Verfahren nach einem der vorstehenden Ansprüche, wobei in Schritt (d) wenigstens eine erste System-Referenz-Eigenschaft (m) auf Basis einer als Historienregelwerk (1800) definierten notwendigen Bedingung (B) bestimmt wird, wobei anhand des Historienregelwerks (1800) eine Zuordnung einer vorbestimmten zeitlichen Abfolge und/oder Dauer von System-Ist-Eigenschaften (s, x, z, α), wie Messwerten (x), Zustandssignalen (z) oder dergleichen, zu der ersten System-Referenz-Eigenschaft (m) durchgeführt wird.

12. System zur Datenverarbeitung, umfassend Mittel zur Ausführung des Verfahrens nach einem der vorstehenden Ansprüche.

13. System nach Anspruch 12 umfassend ein Steuer- und/oder Regelungssystem für eine prozesstechnische Anlage mit wenigstens einem Stellgerät zum Einstellen einer Prozessfluidströmung.

## Claims

1. Method (100) for diagnosing an open-loop and/or closed-loop control system of a process engineering plant (10) having at least one actuator (1) for adjusting a process fluid, comprising the steps of
a) providing a diagnosis database (1400) which comprises an assignment of a plurality of state causes (n) to in each case one set comprising a plurality of predetermined system reference properties (m), wherein a necessary condition (B) is assigned to each system reference property;
b) providing a test database (1500) which comprises an assignment of different diagnosis tests (t) to in each case at least one predetermined system reference property (m);
c) detecting (200) at least one system actual property (s, x, z, α) of the open-loop and/or closed-loop control system;
d) determining at least one first system reference property (m), the condition (B) of which is satisfied by the at least one system actual property (s, x, z, α) detected in step (c);
e) on the basis of the diagnosis database (1400), for at least one state cause (n), the set (N) of predetermined system reference properties (m) of which comprises the first system reference property (m) determined in step (d), for at least one second system reference property (mₓ) of this set (N), it is detected, in particular on the basis of the at least one system actual property(s) (s, x, z, α) detected in step (c), whether the condition (B) assigned to the second system reference property (mₓ) is (i) determined, is preferably satisfied or is not satisfied, or (ii) is indeterminate;
f) determining at least one diagnosis test (t) on the basis of the test database (1500) corresponding to the at least one second system reference property (mₓ) with a necessary condition (B) detected as indeterminate in step (d).

2. Method according to Claim 1, further comprising a step (g) in which the at least one diagnosis test (t) determined in step (f) is carried out in order to detect a system actual property (s, x, z, α) corresponding to the second system reference property (mx) and, on the basis thereof, to determine the assigned necessary condition (B), in particular to determine whether the necessary condition of the second system reference property (mx) is (i) satisfied or (ii) not satisfied by this system actual property (s, x, z, α).

3. Method according to Claim 2, wherein the diagnosis test in step (g) is carried out only following an operator release (601).

4. Method according to one of the preceding claims, wherein in step (f) a diagnosis test (t) is determined with respect to a state cause (n), of the set (N) of which system reference properties (m) at least one is present, in particular a plurality are present, wherein in particular only a single second system reference property (mₓ) of the set (N) is indeterminate.

5. Method according to one of the preceding claims, wherein in step (f) a diagnosis test is determined which corresponds to at least one second system reference property (mₓ) which is assigned to at least two different state causes.

6. Method according to one of Claims 2 to 5, wherein in a further step (h) a corresponding state cause (n) is detected on the basis of the system reference property (m) determined in step (g) and the diagnosis database (1400).

7. Method according to Claim 6, wherein on the basis of the state cause (n) detected in step (h) a state message relating to this state cause (n), such as an action recommendation (710, 910), warning message or error message, is provided.

8. Method according to Claim 6 or 7, wherein on the basis of the state cause (n) detected in step (h) an action instruction (710) relating to this state cause (n) is provided and transmitted (720, 730) to the open-loop and/or closed-loop control system, wherein in particular the action instruction (710, 910) counteracts this state cause (n) and/or a system reference property (m) assigned to this state cause (n).

9. Method according to one of the preceding claims, wherein in step (c) at least one system actual property (s, x, z, α) is detected during ongoing open-loop and/or closed-loop control operation of the open-loop and/or closed-loop control system.

10. Method according to one of the preceding claims, wherein in step (c) at least one system actual property (s, x, z, α) is detected during a test operation of the open-loop and/or closed-loop control system, in particular in that a diagnosis test is carried out (600) in a planned and/or regular manner.

11. Method according to one of the preceding claims, wherein in step (d) at least one first system reference property (m) is determined on the basis of a necessary condition (B) defined as a history control system (1800), wherein on the basis of the history control system (1800) an assignment of a predetermined time sequence and/or duration of system actual properties (s, x, z, α), such as measured values (x), state signals (z) or the like, to the first system reference property (m) is carried out.

12. System for data processing, comprising means for carrying out the method according to one of the preceding claims.

13. System according to Claim 12, comprising an open-loop and/or closed-loop control system for a process engineering plant having at least one actuator for adjusting a process fluid flow.

## Revendications

1. Procédé (100), destiné à diagnostiquer un système de commande et / ou de régulation d'une installation technique de procédé (10) à l'aide d'au moins un dispositif de réglage (1) pour régler un fluide de processus, comprenant les étapes consistant à
a) mettre à disposition une base de données de diagnostic (1400), qui comprend une attribution de plusieurs causes d'un état (n) à chaque fois un ensemble comprenant plusieurs caractéristiques de référence (m) de système prédéfinies, à chaque caractéristique de référence de système étant attribuée une condition nécessaire (B) ;
b) mettre à disposition une base de données de test (1500), qui comprend une attribution de différents tests de diagnostic (t) à chaque fois au moins une caractéristique de référence (m) de système prédéfinie ;
c) détecter (200) au moins une caractéristique réelle s, x, z, α) de système du système de commande et / ou de régulation ;
d) déterminer au moins une première caractéristique de référence (m) de système, dont la condition (B) est satisfaite par l'au moins une caractéristique réelle (s, x, z, α) de système détectée à l'étape (c) ;
e) sur la base de la base de données de diagnostic (1400), pour au moins une cause d'un état (n), dont l'ensemble (N) de caractéristiques de référence (m) de système prédéfinies comprend la première caractéristique de référence (m) de système déterminée à l'étape (d), il est identifié pour au moins une deuxième caractéristique de référence de système (mₓ) dudit ensemble (N), notamment à l'aide de l'au moins une caractéristique(s) réelle(s) (s, x, z, α) de système détectée à l'étape (c), si la condition (B) (i) attribuée à la deuxième caractéristique de référence de système (mₓ) est déterminée, de préférence satisfaite ou non satisfaite, ou (ii) est indéterminée ;
f) rechercher au moins un test de diagnostic (t) sur la base de la base de données de test (1500), correspondant à l'au moins une deuxième caractéristique de référence (mₓ) de système avec une condition nécessaire (B) identifiée comme étant indéterminée à l'étape (d).

2. Procédé selon la revendication 1, comprenant par ailleurs une étape (g), dans laquelle on réalise au moins un test de diagnostic (t) déterminé à l'étape (f), pour détecter une caractéristique réelle (s, x, z, α) de système correspondant à la deuxième caractéristique de référence de système (mₓ) et sur la base de celle-ci, pour déterminer la condition nécessaire (B) attribuée, notamment pour déterminer si par ladite caractéristique réelle (s, x, z, α) de système, la condition nécessaire de la deuxième caractéristique de référence de système (mₓ) (i) est satisfaite ou (ii) n'est pas satisfaite.

3. Procédé selon la revendication 2, le test de diagnostic à l'étape (g) n'étant réalisé qu'à la suite d'une validation par l'opérateur (601).

4. Procédé selon l'une quelconque des revendications précédentes, à l'étape (f) étant déterminé un test de diagnostic (t) concernant une cause d'un état (n), dans l'ensemble (N) de caractéristiques de référence (m) de système de laquelle au moins une est présente, notamment plusieurs sont présentes, notamment seule une unique deuxième caractéristique de référence de système (mₓ) de l'ensemble (N) étant indéterminée.

5. Procédé selon l'une quelconque des revendications précédentes, à l'étape (f) étant déterminé un test de diagnostic, qui correspond à au moins une deuxième caractéristique de référence de système (mₓ) qui est attribuée à au moins deux différentes causes d'un état.

6. Procédé selon l'une quelconque des revendications 2 à 5, dans une étape (h) supplémentaire, en partant de la caractéristique de référence (m) de système déterminée à l'étape (g) et de la base de données de diagnostic (1400), une cause d'un état (n) étant identifiée.

7. Procédé selon la revendication 6, sur la base de la cause d'un état (n) identifiée à l'étape (h), un message d'état se rapportant à ladite cause d'un état (n), comme une action recommandée (710, 910), un message d'avertissement ou un message de défaut étant mis à disposition.

8. Procédé selon la revendication 6 ou 7, sur la base de la cause d'un état (n) identifiée à l'étape (h), une instruction d'action (710) se rapportant à ladite cause d'un état (n) étant mise à disposition et transmise au système de commande et / ou de régulation (720, 730), notamment l'instruction d'action (710, 910) contrecarrant ladite cause d'un état (n) et / ou une caractéristique de référence (m) de système attribuée à ladite cause d'un état (n).

9. Procédé selon l'une quelconque des revendications précédentes, à l'étape (c), au moins une caractéristique réelle (s, x, z, α) de système étant détectée en cours de mode de fonctionnement et de régulation du système de commande et / ou de régulation.

10. Procédé selon l'une quelconque des revendications précédentes, à l'étape (c), au moins une caractéristique réelle (s, x, z, α) de système étant détectée dans un mode de test du système de commande et / ou régulation, notamment en ce qu'un test de diagnostic est réalisé (600) de manière planifiée et / ou régulière.

11. Procédé selon l'une quelconque des revendications précédentes, à l'étape (d), au moins une première caractéristique de référence (m) de système étant déterminée sur la base d'une condition nécessaire (B) définie en tant que règlement d'historique (1800), à l'aide des règlements d'historique (1800), une attribution à la première caractéristique de référence (m) de système d'une séquence temporelle prédéfinie et / ou d'une durée de caractéristiques réelles (s, x, z, α) de système, comme des valeurs mesurées (x), des signaux d'état (z) ou analogue étant réalisée.

12. Système de traitement de données, comprenant des moyens destinés à réaliser le procédé selon l'une quelconque des revendications précédentes.

13. Système selon la revendication 12, comprenant un système de commande et / ou de régulation pour une installation technique de procédé, doté d'au moins un dispositif de réglage pour le réglage d'une circulation de fluide de processus.
